# EUROPEAN PATENT SPECIFICATION

(11) **EP 3 889 467 B1**
(45) Date of publication and mention of the grant of the patent: **12.07.2023**
(21) Application number: 21165428.0
(22) Date of filing: 29.03.2021
(51) Int. Cl.: F16H 47/02, F16H 61/42, F16H 61/682, F16H 61/02, F16H 61/04, F16H 61/70, F16H 59/68

(54) **METHOD FOR CHANGING OVER TRANSMISSION STAGES OF A TRANSMISSION ARRANGEMENT**
VERFAHREN ZUM SCHALTEN VON GETRIEBESTUFEN EINER GETRIEBEANORDNUNG
PROCÉDÉ DE CHANGEMENT D'ÉTAPES DE TRANSMISSION D'UN AGENCEMENT DE TRANSMISSION

(30) Priority: 02.04.2020 IT 202000006952
(43) Date of publication of application: 06.10.2021
(73) Proprietor: Robert Bosch GmbH, 70442 Stuttgart (DE)
(72) Inventor: Lenzgeiger, Ulrich, 86424 Dinkelscherben (DE); Ilk, Erich, 86169 Augsburg (DE); Frasch, Michael, 89081 Ulm (DE)

(56) References cited:
- WO-A1-94/02758
- DE-A1-102011 055 177
- DE-A1-102016 215 992

## Description

### TECHNICAL FIELD

The present invention relates to the technical field of a transmission arrangement having a hydrostatic transmission and a mechanical manual transmission. In particular, the present invention relates to a method for changing over transmission stages of the transmission arrangement.

### PRIOR ART

A transmission arrangement having a hydrostatic transmission and a mechanical manual transmission which is coupled in series therewith is used in travel drives, for example those of agricultural machines or mobile machines. Automation permits transmission stages of the manual transmission of such transmission arrangements to shift even during travel.

For this purpose, the torque between the hydraulic motor of the hydrostatic transmission and the transmission input of the manual transmission is lowered to zero. This is done by reducing the expulsion volume of the hydraulic motor to zero ("zero oscillation"). When the zero expulsion volume is reached, the old transmission stage is disengaged and the new transmission stage is engaged by means of mechanical synchronization.

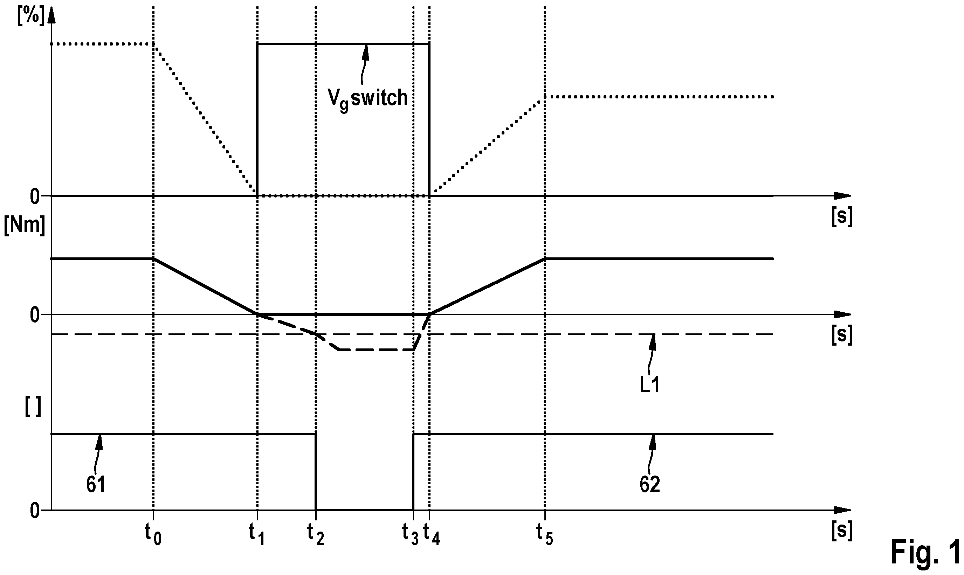

Figure 1 describes a problem, which can occur with a method for changing over transmission stages of a transmission arrangement according to the state of the art, for example with a system like the one described in DE 10 2016 215 992 A1 (from now on simply called PTL1).

Figure 1 shows a method for changing over transmission stages of a transmission arrangement as the one disclosed in PTL1. Before the time t0 a signal requesting a changeover of an engaged transmission stage from a first transmission stage to a second transmission stage is reached. At the time t0 a setpoint value signal of the expulsion volume of the motor is set to zero. At the time t1 the expulsion volume equal to zero is reached. At this point in time the first transmission stage G1 is still engaged.

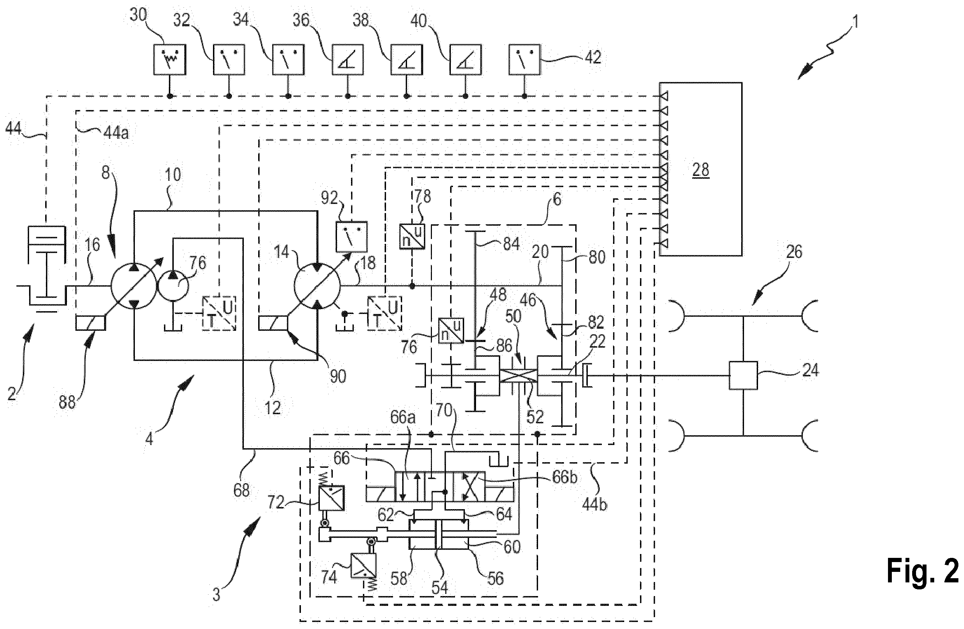

At the time t1, the zero expulsion volume of the motor can be detected (see Vg switch on the upper portion of Figure 1) and the changing of the transmission stage can be started. It is to be noted that it is also possible that a time delay occurs between the arrival of the zero expulsion volume of the motor and the time at which the zero expulsion volume of the motor is effectively detected (as described in Figure 2 of PTL1).

At the time t2 the first transmission stage G1 is disengaged and at the time t3 the second transmission stage G2 is engaged. Thereafter, at the time t4, the expulsion volume of the motor is gradually increased in order to reach a desired amount.

However, it is possible that, if particular conditions occur, the changing of the transmission stage cannot be completed, in particular in the interval between t2 and t3.

For example due to a particular pressure or temperature, or velocity, it is possible that the drag torque of the motor reaches a value, which in the worst case hinders the safe engagement of the required gear.

In particular, if the drag torque of the hydraulic motor and of the gearbox are out of the limits of the synchronizer, a safe engagement of a required gear cannot be completed successfully. This is because the synchronizer is capable to synchronize the speed but not able to engage with the second transmission stage G2. In the particular case depicted in Figure 1, if the drag torque exceeds a predetermined value, which is represented by the dashed horizontal line L1, the safe engagement of the required gear is hindered.

Furthermore, DE 10 2011 055177 A1 discloses a method for changing over transmission stages of a transmission arrangement, the transmission arrangement comprising a first hydraulic machine coupled to a drive machine, a second hydraulic machine having an adjustable expulsion volume, wherein the second hydraulic machine is fluidically connected to the first hydraulic machine via a first working line of the transmission arrangement and a second working line of the transmission arrangement, wherein the second hydraulic machine is coupled to a manual transmission of the transmission arrangement so that a torque of the second hydraulic machine can be transmitted to the manual transmission, the manual transmission having at least two transmission stages, the method comprising the sequentially executed steps of requesting a changeover of an engaged transmission stage from a first transmission stage to a second transmission stage, setting a setpoint value signal of the expulsion volume of the second hydraulic machine to zero, disengaging the first transmission stage, wherein before starting with said disengaging the first transmission stage the expulsion volume of the second hydraulic machine is already zero, and engaging the second transmission stage.

Scope of the present invention is, therefore, to provide a method for changing over transmission stages of a transmission arrangement, which enables to overcome the above mentioned problem.

### SUMMARY

According to an embodiment of the present invention a method for changing over transmission stages of a transmission arrangement is provided, wherein the transmission arrangement comprises: a first hydraulic machine coupled to a drive machine, a second hydraulic machine having an adjustable expulsion volume, wherein the second hydraulic machine is fluidically connected to the first hydraulic machine via a first working line of the transmission arrangement and a second working line of the transmission arrangement, wherein the second hydraulic machine is coupled to a manual transmission of the transmission arrangement so that a torque can be transmitted, the manual transmission having at least two transmission stage. The method comprises the following steps:
a) requesting a changeover of an engaged transmission stage from a first transmission stage to a second transmission stage;
b) setting a setpoint value signal of the expulsion volume of the second hydraulic machine to zero;
c) disengaging the first transmission stage, wherein before starting with said disengaging the first transmission stage the expulsion volume of the second hydraulic machine is already zero;
d) regulating the second hydraulic machine so that expulsion volume of the second hydraulic machine reaches a value greater than zero so as to bring a drag torque of the second hydraulic machine (14) within a predetermined range;
e) engaging the second transmission stage. In said method the steps a) to e) are executed sequentially.

According to a further embodiment of the present invention a method is provided, wherein the expulsion volume of the second hydraulic machine is regulated by means of adjusting means, wherein during said step d) the expulsion volume of the second hydraulic machine is varied along a predetermined gradient between a first expulsion volume of the second hydraulic machine, which is equal to zero, and a second expulsion volume of the second hydraulic machine, which is greater than zero.

According to a further embodiment of the present invention a method is provided, wherein said adjustment apparatus during said step d) receives an electrical actuation current, which gradually increases, wherein said electrical actuation current enables to proportionally adjust the expulsion volume of the second hydraulic machine.

According to a further embodiment of the present invention a method is provided, wherein when the step c) is started the electrical actuation current is increased from zero to a predetermined value, wherein said predetermined value of the electrical actuation current causes the expulsion volume of the second hydraulic machine to remain equal to zero.

According to a further embodiment of the present invention a method is provided, wherein the engaging of the second transmission stage of said step e) is executed by means of a synchronization unit which is configured to synchronize a rotation velocity of the second hydraulic machine with the velocity of the second transmission stage.

### BRIEF DESCRIPTION OF THE FIGURES

The present invention is described with reference to the enclosed figures wherein the same reference numbers refer to the same parts and/or to similar parts and/or to corresponding parts of the system. In the figures:
Figure 1 shows a problem occurring by changing over transmission stages of a transmission arrangement according to the state of the art;
Figure 2 shows a circuit diagram of a travel drive known by the state of the art;
Figure 3 shows a time diagram of a change up of a transmission arrangement according to an embodiment of the present invention;
Figure 4 shows a time diagram of a change down of a transmission arrangement according to an embodiment of the present invention.

### DETAILED DESCRIPTION

In the following, the present invention is described with reference to particular embodiments as shown in the enclosed figures. Nevertheless, the present invention is not limited to the particular embodiments described in the following detailed description and shown in the figures, but rather the embodiments described simply exemplify several aspects of the present invention, the scope of which is defined by the claims.

Further modifications and variations of the present invention will be clear for the person skilled in the art. The present description is thus to be considered as including all said modifications and/or variations of the present invention, the scope of which is defined by the claims.

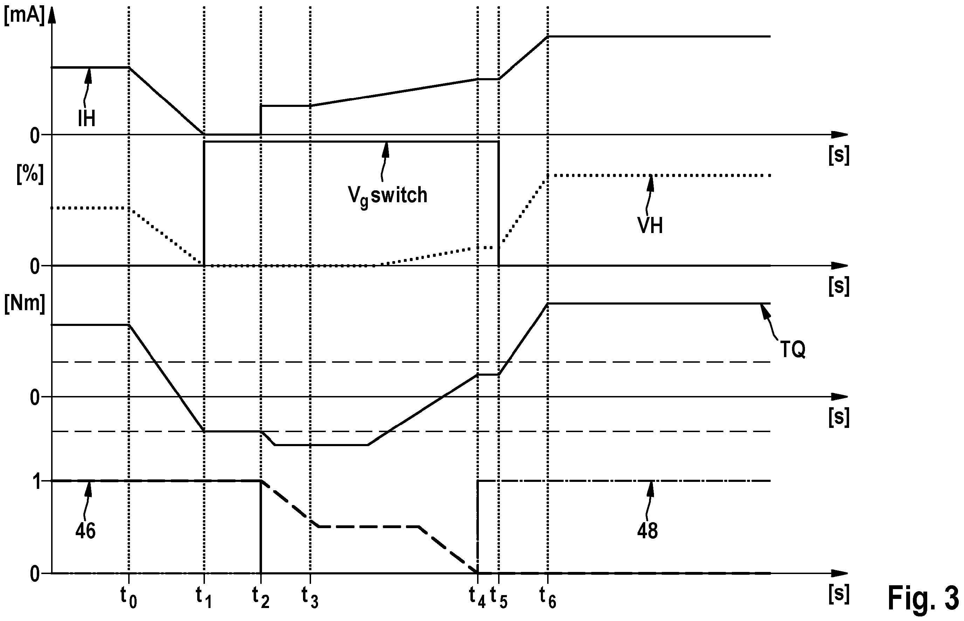

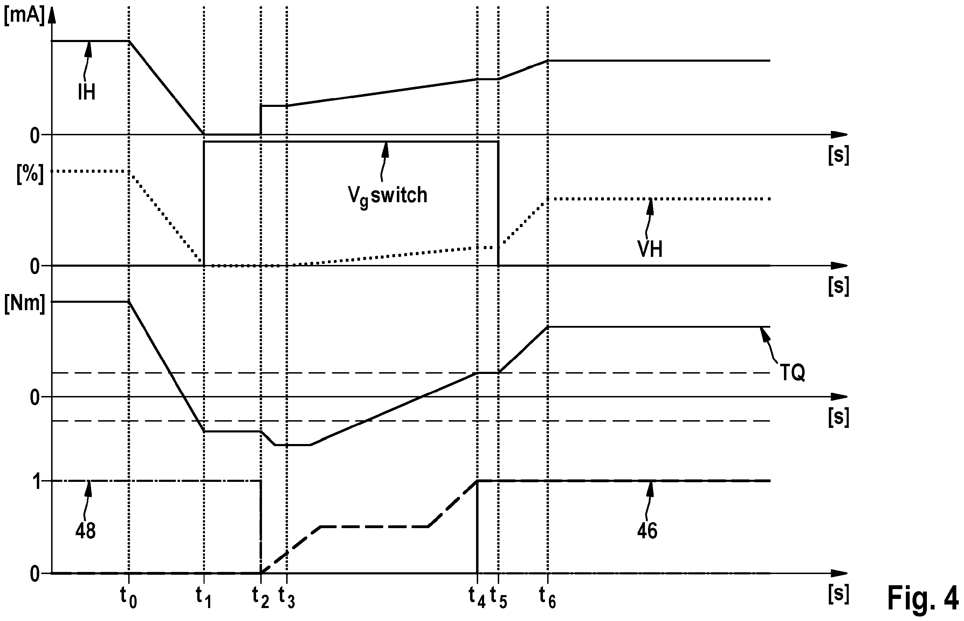

With reference to figure 2 a travel drive known from the state of the art, and in particular from PTL1 will be described. Furthermore, with reference to figures 3 and 4 a method respectively for change up and change down of the travel drive of fig. 2 according to an embodiment of the present invention will be described.

According to fig. 2, a travel drive 1, for example that of a mobile machine, has a transmission arrangement 3 with a drive machine 2 which is embodied as a diesel engine, a hydrostatic transmission 4 and a two-stage (in the exemplary embodiment) manual transmission 6. The hydrostatic transmission 4 has a first hydraulic machine 8, which is configured as an axial piston pump with a swash plate design, which is fluidically connected, in a closed, hydraulic circuit, via two working lines 10, 12 to a second hydraulic machine 14, embodied preferably as an axial piston motor with a swash plate design.

The first hydraulic machine 8 is coupled via a motor shaft 16 to the drive machine 2. A drive shaft 18 of the second hydraulic machine 14 is coupled to an input shaft 20 of the manual transmission 6. An output shaft 22 of the manual transmission 6 is coupled to a differential 24 of a two-wheeled axle 26 of the travel drive 1. The two hydraulic machines 8, 14 each have an adjustable expulsion volume. The first hydraulic machine 8 is configured here in such a way that it can operate both as a hydraulic pump and as a hydraulic motor in all four quadrants, in both directions of torque. The second hydraulic machine 14 has its adjustment range only between a zero expulsion volume and a positive maximum value.

Furthermore, the transmission arrangement 3 has a control apparatus 28, in particular for controlling the torque of the drive shaft 18 and of the transmission input shaft 20, and the expulsion volumes of the hydraulic machines 8, 14. A shifting request apparatus 30, a gear speed selection apparatus 32, a direction of travel selection apparatus 34, an accelerator pedal 36, a creeping gear speed selection apparatus 38, a brake pedal 40 and an automatic selection apparatus 42 are connected in terms of signaling to the control apparatus 28. All the specified apparatuses 30 to 42 are connected in terms of signaling via a CAN bus 44, both to the control apparatus 28 and at least to the drive machine 2.

The manual transmission 6 has a lower transmission stage 46, and a higher transmission stage 48 of the rotational speed nA of the output shaft 23 with respect to the rotational speed nHM of the input shaft 18. Furthermore, the manual transmission 6 has a synchronization unit 50. An actuator 52 of the synchronization unit 50 is rigidly coupled to a piston 54 of an actuation cylinder 56, whose technical characteristics and functioning are explained in details in PTL1.

The hydrostatic transmission 4 has a variable, continuously adjustable transmission ratio range. The manual transmission 6 which is connected downstream of the latter serves to cover a necessary speed range of the travel drive 1. The transmission arrangement 3 is configured here in such a way that the manual transmission 6 can be shifted during the travel operation.

The shifting or changing over of the transmission stages 46, 48 can be controlled in an automated fashion by means of the control apparatus 28. For this purpose, the transmission arrangement 3 has a rotational speed sensor 76 by means of which the rotational speed nA of the output shaft 22 can be detected. In addition, it has a rotational speed sensor 78 for detecting the rotational speed of the input shaft 18. Furthermore, the second hydraulic machine 14 has a position detection unit 92 which is configured as a proximity switch and by means of which the zero expulsion volume of the second hydraulic machine 14 can be detected.

The lower transmission stage 46 has a gear wheel 80, which is fixedly coupled to the input shaft 20 and is in permanent engagement with an idler wheel 82, which can be coupled to the output shaft 22 via the synchronization unit 50. Correspondingly, the higher transmission stage 48 has a gear wheel 84, which is fixedly coupled to the input shaft 20, and an idler wheel 86 which is permanently engaged therewith and can be coupled to the output shaft 22 by means of the synchronization unit 50.

According to fig. 2, the first hydraulic machine 8 has an adjustment unit 88 for adjusting its expulsion volume and the second hydraulic machine 14 has an adjustment apparatus 90 for adjusting its expulsion volume VH. The adjustment apparatus 90 operates here electro-proportionally (EP adjustment).

In order to adjust a cradle of the second hydraulic machine 14, and therefore the expulsion volume VH, the adjustment apparatus 90 has a hydraulic actuation cylinder, the pressure spaces of which, which are effective in a reciprocal fashion, can each be supplied with pressure medium via an electro-proportionally adjustable pressure regulating valve. The electro-proportional adjustment permits infinitely variable adjustment of the expulsion volume VH. In this context, the adjustment takes place proportionally with respect to an applied electrical actuation current IH.

A method respectively for change up and change down of the travel drive of fig. 2 according to an embodiment of the present invention will be described in the following paragraphs.

Both in figures 3 and 4 are divided analogously from the top to the bottom into four sections. In the first section (from the top) an applied electrical actuation current (in mA) received by the adjustment apparatus 90 over the time is depicted. In the second section both a motor expulsion volume VH (with a dotted line) and a signal (Vg switch) are depicted, wherein the signal Vg switch indicates if the switching is allowed to take place (with a continuous line). The third section describes a trend of the manual transmission 6 input torque TQ over the time. Furthermore, the two horizontal lines describes an allowed torque range for the input torque TQ. The fourth and last section describes both a logic variable (gear engaged yes/no) for the lower and the higher transmission stage 46, 48 (with continuous lines) and a displacement of the synchronization unit 50 (with a dashed line) over the time.

In the following, with reference to figures 2 and 3, a method for change up will be described.

Before the time t0 a signal requesting a changeover of an engaged transmission stage from the lower transmission stage 46 to the higher transmission stage 48 is reached.

Starting from a point in time 0 (see figure 3), at which the lower transmission stage 46 is engaged, the adjustment apparatus 90 of the second hydraulic machine 14 is energized with a constant current IH, and the expulsion volume VH of the second hydraulic machine 14 is at a predetermined value, and there is no shifting request present at all.

The request for shifting is made by means of the gear speed selection apparatus 32 according to fig. 2. As a result, the control apparatus 28, at time t0, after receiving said request, lowers the actuation current IH of the adjustment apparatus 90 so that the cradle of the second hydraulic machine 14 cause the expulsion volume of the second hydraulic machine 14 to be equal to zero, by gradually changing the slope angle of the swash plate.

At the time t1 the expulsion volume equal to zero is reached. After a short dwell time, or simultaneously (as shown in the figure), the position detection unit 92 detects this zero position of the cradle of the second hydraulic machine 14 and outputs the corresponding signal to the control apparatus 28. Therefore, the signal Vg switch, which indicates that the switching is allowed to take place, is set to a positive value and the switching is allowed to start. At this point in time the lower transmission stage 46 is still engaged.

At the same time t1 the control apparatus 28 switches a 4/3-way switching valve 66 (see figure 2) into it's a second switched position 66b. The second pressure medium space 60 is then supplied with pressure medium from the pressure medium line 68.

In that way, the synchronization unit 50, to be more precise the sliding sleeve 52 thereof, at time t2 is firstly actuated hydraulically by means of the control apparatus 28. When the synchronization unit 50 is actuated the electrical actuation current IH is increased from zero to a predetermined value, wherein said predetermined value of the electrical actuation current IH causes the expulsion volume VH of the second hydraulic machine 14 to remain equal to zero. As an example said predetermined value can be equal to 360 mA. The value of the electrical actuation current IH is maintained constant until a time t3. The time interval between t2 and t3 can be equal to 130 ms. However, it is also possible to reduce said value to zero.

At time t3 the electrical actuation current IH is gradually increased from the first predetermined value. The electrical actuation current, as shown in the figure, can be increased with a constant gradient, for example 1.5 mA/10 ms if the interval between t2 and t3 is equal to 130 ms. After some time, when a threshold value is reached, the expulsion volume of the second hydraulic machine starts to increase and, therefore, the expulsion volume reaches a value greater than zero.

Such a solution enables to reduce the high drag torque applied to the synchronous device during the shifting operation in such a way that the shifting operation can be carried out successfully. In this regard, as shown in figure 3, as soon as the expulsion volume VH of the second hydraulic machine 14 starts to increase the drag torque TQ is reduced in such a way that its value is contained within a space between the two horizontal lines, which describes an allowed torque range for the input torque. By a change up the allowed range can be comprised between +25 Nm. Therefore, the procedure for reducing the drag torque TQ during the shifting process effectively reduces the drag torque and the shifting process can be accordingly implemented.

Thereafter the synchronization of the input shaft 20 (drive shaft 18) with the output shaft 22 takes place. If the rotational speeds of the input shaft 20 and of the output shaft 22 are synchronized according to the new transmission ratio of the higher transmission stage 48 the synchronization unit 50 locks shaft 22 with the gear 86. As a result the output shaft 22 is connected in a rotationally fixed fashion to the idler wheel 86, and the higher transmission stage 48 is engaged. This corresponds to the point in time t4. This result is achieved due to the above-described procedure for reducing the drag torque TQ during the shifting process, which effectively reduces the drag torque and enables the shifting process to be implemented.

With a certain delay, at the point in time t5, this rise is detected by the position detection unit 92. Therefore, the signal Vg switch, which indicates that the switching is allowed to take place, is set to a negative value, which indicates that the switching has been completed. At this point in time t5 the higher transmission stage 48 has been engaged.

At the point in time t5, the incremental raising of the actuation current IH of the adjustment apparatus 90 takes place. Correspondingly, the expulsion volume VH of the second hydraulic machine 14 follows and rises. The value of the reached expulsion volume VH is higher than the value of the expulsion volume VH at the point t0. The reason being that a change up occurred. In the same way the manual transmission 6 input torque TQ is higher than the value of the manual transmission 6 input torque TQ at the point t0.

In the following, with reference to figures 2 and 4, a method for change down will be described.

Before the time t0 a signal requesting a changeover of an engaged transmission stage from the higher transmission stage 48 to the lower transmission stage 46 is reached.

Starting from a point in time 0 (see figure 4), at which the higher transmission stage 48 is engaged, the adjustment apparatus 90 of the second hydraulic machine 14 is energized with a constant current IH, and the expulsion volume VH of the second hydraulic machine 14 is at a predetermined value, and there is no shifting request present at all.

The request for shifting is made by means of the gear speed selection apparatus 32 according to fig. 2. As a result, the control apparatus 28, at time t0, after receiving said request, lowers the actuation current IH of the adjustment apparatus 90 so that the cradle of the second hydraulic machine 14 cause the expulsion volume of the second hydraulic machine 14 to be equal to zero, by gradually changing the slope angle of the swash plate.

At the time t1 the expulsion volume equal to zero is reached. After a short dwell time, or simultaneously (as shown in the figure), the position detection unit 92 detects this zero position of the cradle of the second hydraulic machine 14 and outputs the corresponding signal to the control apparatus 28. Therefore, the signal Vg switch, which indicates that the switching is allowed to take place, is set to a positive value and the switching is allowed to start. At this point in time the lower transmission stage 46 is still engaged.

At the same time t1 the control apparatus 28 switches a 4/3-way switching valve 66 (see figure 2) into it's a first switched position 66a. The first pressure medium space 60 is then supplied with pressure medium from the pressure medium line 68.

In that way, the synchronization unit 50, to be more precise the sliding sleeve 52 thereof, at time t2 is firstly actuated hydraulically by means of the control apparatus 28. When the synchronization unit 50 is actuated the electrical actuation current IH is increased from zero to a predetermined value, wherein said predetermined value of the electrical actuation current IH causes the expulsion volume VH of the second hydraulic machine 14 to remain equal to zero. As an example said predetermined value can be equal to 360 mA. The value of the electrical actuation current IH is maintained constant until a time t3. The time interval between t2 and t3 can be equal to 130 ms. However, it is also possible to reduce said value to zero.

At time t3 the electrical actuation current IH is gradually increased from the first predetermined value. The electrical actuation current, as shown in the figure, can be increased with a constant gradient, for example 1.5 mA/10 ms if the interval between t2 and t3 is equal to 130 ms or 1 mA/10 ms if the interval between t2 and t3 is equal to 0. After some time, when a threshold value is reached, the expulsion volume of the second hydraulic machine starts to increase and, therefore, the expulsion volume reaches a value greater than zero.

Such a solution enables to reduce the high drag torque applied to the synchronous device during the shifting operation in such a way that the shifting operation can be carried out successfully. In this regard, as shown in figure 4, as soon as the expulsion volume VH of the second hydraulic machine 14 starts to increase the drag torque is reduced in such a way that its value is contained within a space between the two horizontal lines, which describes an allowed torque range for the input torque. Therefore, the procedure for reducing the drag torque during the shifting process effectively reduces the drag torque and the shifting process can be accordingly implemented. By a change down the allowed range can be comprised between +13 Nm.

Thereafter the synchronization of the input shaft 20 (drive shaft 18) with the output shaft 22 takes place. If the rotational speeds of the input shaft 20 and of the output shaft 22 are synchronized according to the new transmission ratio of the lower transmission stage 46 the synchronization unit 50 locks shaft 22 with the gear 82. As a result the output shaft 22 is connected in a rotationally fixed fashion to the idler wheel 82, and the lower transmission stage 46 is engaged. This corresponds to the point in time t4. This result is achieved due to the above-described procedure for reducing the drag torque TQ during the shifting process, which effectively reduces the drag torque and enables the shifting process to be implemented.

With a certain delay, at the point in time t5, this rise is detected by the position detection unit 92. Therefore, the signal Vg switch, which indicates that the switching is allowed to take place, is set to a negative value, which indicates that the switching has been completed. At this point in time t5 the lower transmission stage 48 has been engaged.

At the point in time t5, the incremental raising of the actuation current IH of the adjustment apparatus 90 takes place. Correspondingly, the expulsion volume VH of the second hydraulic machine 14 follows and rises. The value of the reached expulsion volume VH is lower than the value of the expulsion volume VH at the point t0. The reason being that a change down occurred. In the same way the manual transmission 6 input torque TQ is lower than the value of the manual transmission 6 input torque TQ at the point t0.

In addition, those areas in which it is believed that those of ordinary skill in the art are familiar, have not been described herein in order not to unnecessarily obscure the invention described.

Accordingly, the invention is not to be limited by the specific illustrative embodiments, but only by the scope of the appended claims.

## Claims

1. A method for changing over transmission stages (46, 48) of a transmission arrangement (3), the transmission arrangement (3) comprising:
a first hydraulic machine (8) coupled to a drive machine (2),
a second hydraulic machine (14) having an adjustable expulsion volume (VH), wherein
the second hydraulic machine (14) is fluidically connected to the first hydraulic machine (8) via a first working line (10) of the transmission arrangement (3) and a second working line (12) of the transmission arrangement (3), wherein the second hydraulic machine (14) is coupled to a manual transmission (6) of the transmission arrangement (3) so that a torque of the second hydraulic machine (14) can be transmitted to the manual transmission (6), the manual transmission (6) having at least two transmission stages (46, 48),
the method comprising the following steps:
a) requesting a changeover of an engaged transmission stage (46, 48) from a first transmission stage (46, 48) to a second transmission stage (46, 48);
b) setting a setpoint value signal of the expulsion volume (VH) of the second hydraulic machine (14) to zero;
c) disengaging the first transmission stage (46, 48), wherein before starting with said disengaging the first transmission stage (46, 48) the expulsion volume (VH) of the second hydraulic machine (14) is already zero;
d) regulating the second hydraulic machine (14) so that expulsion volume (VH) of the second hydraulic machine (14) reaches a value greater than zero, so as to bring a drag torque of the second hydraulic machine (14) within a predetermined range;
e) engaging the second transmission stage (46, 48);
said steps a) to e) being executed sequentially.

2. Method according to claim 1, wherein the expulsion volume (VH) of the second hydraulic machine (14) is regulated by means of adjusting means (90), , wherein during said step d) the expulsion volume (VH) of the second hydraulic machine (14) is varied along a predetermined gradient between a first expulsion volume (VH) of the second hydraulic machine (14), which is equal to zero, and a second expulsion volume (VH) of the second hydraulic machine (14), which is greater than zero.

3. Method according to claim 2, wherein said adjustment apparatus (90) during said step d) receives an electrical actuation current (IH), which gradually increases, wherein said electrical actuation current (IH) enables to proportionally adjust the expulsion volume (VH) of the second hydraulic machine (14).

4. Method according to claim 3, wherein when the step c) is started the electrical actuation current (IH) is set to a predetermined value, wherein said predetermined value of the electrical actuation current (IH) causes the expulsion volume (VH) of the second hydraulic machine (14) to remain equal to zero.

5. Method according to any of any of claims 1 to 4, wherein the engaging of the second transmission stage (46, 48) of said step e) is executed by means of a synchronization unit (50) which is configured to synchronize a rotation velocity of the second hydraulic machine (14) with the velocity of the second transmission stage (46, 48).

## Patentansprüche

1. Verfahren zum Schalten von Getriebestufen (46, 48) einer Getriebeanordnung (3), wobei die Getriebeanordnung (3) Folgendes umfasst:
eine erste hydraulische Maschine (8), gekoppelt mit einer Antriebsmaschine (2),
eine zweite hydraulische Maschine (14) mit einem einstellbaren Austreibungsvolumen (VH), wobei die zweite hydraulische Maschine (14) über eine erste Arbeitsleitung (10) der Getriebeanordnung (3) und eine zweite Arbeitsleitung (12) der Getriebeanordnung (3) fluidisch mit der ersten hydraulischen Maschine (8) verbunden ist,
wobei die zweite hydraulische Maschine (14) mit einem manuellen Getriebe (6) der Getriebeanordnung (3) gekoppelt ist, sodass ein Drehmoment der zweiten hydraulischen Maschine (14) zum manuellen Getriebe (6) übertragen werden kann, wobei das manuelle Getriebe (6) mindestens zwei Getriebestufen (46, 48) aufweist,
wobei das Verfahren die folgenden Schritte umfasst:
a) Anfordern eines Schaltens einer eingerückten Getriebestufe (46, 48) von einer ersten Getriebestufe (46, 48) zu einer zweiten Getriebestufe (46, 48);
b) Einstellen eines Einstellwertsignals des Austreibungsvolumens (VH) der zweiten hydraulischen Maschine (14) auf Null;
c) Trennen der ersten Getriebestufe (46, 48), wobei, vor dem Beginn des Trennens der ersten Getriebestufe (46, 48), das Austreibungsvolumen (VH) der zweiten hydraulischen Maschine (14) bereits Null ist;
d) Regulieren der zweiten hydraulischen Maschine (14), sodass das Austreibungsvolumen (VH) der zweiten hydraulischen Maschine (14) einen Wert erreicht, der größer als Null ist, um ein Schleppmoment der zweiten hydraulischen Maschine (14) in einen vorbestimmten Bereich zu bringen;
e) Einrücken der zweiten Getriebestufe (46, 48);
wobei die Schritte a) bis e) nacheinander ausgeführt werden.

2. Verfahren nach Anspruch 1, wobei das Austreibungsvolumen (VH) der zweiten hydraulischen Maschine (14) mittels eines Einstellmittels (90) reguliert wird, wobei während des Schritts d) das Austreibungsvolumen (VH) der zweiten hydraulischen Maschine (14) entlang eines vorbestimmten Gradienten zwischen einem ersten Austreibungsvolumen (VH) der zweiten hydraulischen Maschine (14), was gleich Null ist, und einem zweiten Austreibungsvolumen (VH) der zweiten hydraulischen Maschine (14), was größer als Null ist, variiert wird.

3. Verfahren nach Anspruch 2, wobei die Einstelleinrichtung (90) während des Schritts d) einen elektrischen Betätigungsstrom (IH) empfängt, der allmählich größer wird, wobei der elektrische Betätigungsstrom (IH) ermöglicht, das Austreibungsvolumen (VH) der zweiten hydraulischen Maschine (14) proportional anzupassen.

4. Verfahren nach Anspruch 3, wobei, wenn der Schritt c) gestartet wird, der elektrische Betätigungsstrom (IH) auf einen vorbestimmten Wert gesetzt wird, wobei der vorbestimmte Wert des elektrischen Betätigungsstroms (IH) bewirkt, dass das Austreibungsvolumen (VH) der zweiten hydraulischen Maschine (14) gleich Null bleibt.

5. Verfahren nach einem der Ansprüche 1 bis 4, wobei das Einrücken der zweiten Getriebestufe (46, 48) aus Schritt e) mittels einer Synchronisierungseinheit (50) ausgeführt wird, die ausgelegt ist zum Synchronisieren einer Rotationsgeschwindigkeit der zweiten hydraulischen Maschine (14) mit der Geschwindigkeit der zweiten Getriebestufe (46, 48).

## Revendications

1. Procédé de changement d'étapes de transmission (46, 48) d'un agencement de transmission (3), l'agencement de transmission (3) comprenant :
une première machine hydraulique (8) couplée à une machine d'entraînement (2),
une deuxième machine hydraulique (14) ayant un volume d'expulsion (VH) réglable, la deuxième machine hydraulique (14) étant reliée fluidiquement à la première machine hydraulique (8) par l'intermédiaire d'une première conduite de travail (10) de l'agencement de transmission (3) et d'une deuxième conduite de travail (12) de l'agencement de transmission (3), dans lequel la deuxième machine hydraulique (14) est couplée à une transmission manuelle (6) de l'agencement de transmission (3) de sorte qu'un couple de la deuxième machine hydraulique (14) peut être transmis à la transmission manuelle (6), la transmission manuelle (6) ayant au moins deux étapes de transmission (46, 48),
le procédé comprenant les étapes suivantes :
a) la demande d'un passage d'une étape de transmission engagée (46, 48) d'une première étape de transmission (46, 48) à une deuxième étape de transmission (46, 48) ;
b) la mise à zéro d'un signal de valeur de consigne du volume d'expulsion (VH) de la deuxième machine hydraulique (14) ;
c) le désengagement de la première étape de transmission (46, 48), le volume d'expulsion (VH) de la deuxième machine hydraulique (14) étant déjà égal à zéro avant de commencer à désengager la première étape de transmission (46, 48) ;
d) la régulation de la deuxième machine hydraulique (14) de manière à ce que le volume d'expulsion (VH) de la deuxième machine hydraulique (14) atteigne une valeur supérieure à zéro, afin de ramener un couple d'entraînement de la deuxième machine hydraulique (14) dans une plage prédéterminée ;
e) l'engagement de la deuxième étape de transmission (46, 48) ;
lesdites étapes a) à e) étant exécutées séquentiellement.

2. Procédé selon la revendication 1, dans lequel le volume d'expulsion (VH) de la deuxième machine hydraulique (14) est régulé au moyen d'un dispositif de réglage (90), dans lequel, au cours de ladite étape d), le volume d'expulsion (VH) de la deuxième machine hydraulique (14) est varié selon un gradient prédéterminé entre un premier volume d'expulsion (VH) de la deuxième machine hydraulique (14), qui est égal à zéro, et un deuxième volume d'expulsion (VH) de la deuxième machine hydraulique (14), qui est supérieur à zéro.

3. Procédé selon la revendication 2, dans lequel ledit dispositif de réglage (90) reçoit, au cours de ladite étape d), un courant d'actionnement électrique (IH) qui augmente progressivement, ledit courant d'actionnement électrique (IH) permettant de régler proportionnellement le volume d'expulsion (VH) de la deuxième machine hydraulique (14).

4. Procédé selon la revendication 3, dans lequel, lorsque l'étape c) est lancée, le courant d'actionnement électrique (IH) est réglé à une valeur prédéterminée, ladite valeur prédéterminée du courant d'actionnement électrique (IH) faisant en sorte que le volume d'expulsion (VH) de la deuxième machine hydraulique (14) reste égal à zéro.

5. Procédé selon l'une quelconque des revendications 1 à 4, dans lequel l'engagement de la deuxième étape de transmission (46, 48) de ladite étape e) est exécuté au moyen d'une unité de synchronisation (50) qui est configurée pour synchroniser une vitesse de rotation de la deuxième machine hydraulique (14) avec la vitesse de la deuxième étape de transmission (46, 48).
